# EUROPÄISCHE PATENTSCHRIFT

(11) **EP 3 037 234 B1**
(45) Veröffentlichungstag und Bekanntmachung des Hinweises auf die Patenterteilung: **28.02.2018**
(21) Anmeldenummer: 15198779.9
(22) Anmeldetag: 09.12.2015
(51) Int. Cl.: B29B 11/16, B29C 35/08, B29C 35/16, B29C 70/42, B29K 105/08, B29K 101/12

(54) **VORRICHTUNG ZUR KONSOLIDIERUNG EINER PREFORM**
A DEVICE FOR CONSOLIDATING A PREFORM
DISPOSITIF DE CONSOLIDATION D'UNE PREFORME

(30) Priorität: 22.12.2014 DE 102014018933
(43) Veröffentlichungstag der Anmeldung: 29.06.2016
(73) Patentinhaber: Airbus Defence and Space GmbH, 85521 Ottobrunn (DE)
(72) Erfinder: WEIMER, Christian, Dr., 81539 München (DE); ENGEL, Franz, 81539 München (DE); ORTH, Tilman, 80469 München (DE)
(74) Vertreter: LKGLOBAL Lorenz & Kopf PartG mbB Patentanwälte

(56) Entgegenhaltungen:
- EP-A1- 1 844 914
- EP-A1- 2 363 273
- EP-A1- 2 730 385

## Beschreibung

Die vorliegende Erfindung betrifft eine Vorrichtung zur finalen Konsolidierung einer Preform. Derartige Vorrichtungen werden insbesondere zur Herstellung von Rumpfschalen im Luftfahrzeugbau verwendet.

Diesbezüglich sind sogenannte Fiber-Placement-Systeme bekannt, mittels welcher eine in-line Konsolidierung einzelner Tapes direkt an einem Ablegepunkt erreicht werden soll. Dabei können Probleme hinsichtlich der Temperaturverteilung bei mehrlagigen Aufbauten auftreten, was Bauteilverzug und einen erhöhten Porengehalt im Laminat zur Folge haben kann. Typischerweise werden dabei Lasersysteme als Heiztechnik eingesetzt, um den notwendigen Energieeintrag zu erreichen und es ist ein nachgeschalteter Autoklav- oder Ofenprozess vorgesehen, wodurch hohe Kosten im Betrieb und in der Anschaffung entstehen können.

Weitere bekannte Verfahren sehen das Ablegen von Fasern vor, z.B. Automated-Fibre-Placement (AFP) und Automated-Tape-Laying (ATL). Dabei wird von einem Maschinenkopf ein präimprägniertes Faserhalbzeug über Rollen auf einer Bauteilform abgelegt, das Matrixmaterial durch Wärmeeintrag aufgeschmolzen und über eine Kompaktierrolle der zum Konsolidieren benötigte Druck aufgebracht, wobei gleichzeitig über diese Rolle gekühlt und dadurch konsolidiert wird. Mit diesen Verfahren werden die Einzellagen der Bauteile aus mehreren parallelen Einzelbahnen aufgebaut. Industriell werden mit diesen Systemen Schalenbauteile für Luftfahrzeuge aus duroplastischen Kohlefaserverbundwerkstoffen hergestellt.

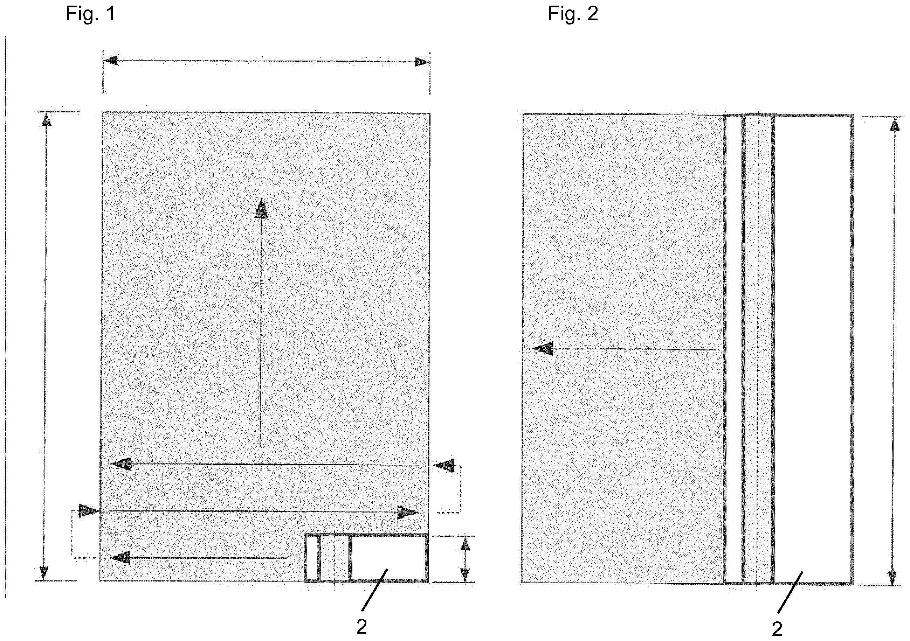

Aufgrund des duroplastischen Matrixmaterials ist hier eine Aushärtung in einem Autoklaveprozess notwendig. Die beschriebenen Anlagen können üblicherweise Halbzeuge bzw. Preforms 2 mit einer Breite von 3 bis 300 mm pro Bahn ablegen, was in Fig. 1 dargestellt ist. Es dauert daher bereits vor dem notwendigen Autoklaveprozess sehr lange, ein komplettes Schalenelement aufzubauen.

Es ist die Aufgabe der vorliegenden Erfindung, eine besonders wirtschaftliche Vorrichtung der eingangs genannten Art bereitzustellen, mit welcher mit einem optimierten Wärmeeintrag bei höherer Produktivität qualitativ hochwertigere Bauteile hergestellt werden können.

Die Aufgabe wird gelöst durch die Vorrichtung nach dem unabhängigen Patentanspruch.

Die EP 1 844 914 A1 betrifft ein Verfahren und eine Vorrichtung zur Herstellung von strukturellen Verstärkungsvorformen für verschiedene flüssige Kompositverfahren, wie z. B. Harztransferformverfahren (RTM) und Reaktionsspritzgussverfahren (SRIM) für Strukturverbunde, wobei eine Harzmatrix als verformbares Kunststoffmaterial verwendet wird. Die Harzmatrix wird in die Zwischenräume zwischen den Fasern der geformten strukturellen Verstärkungsvorformen eingefüllt, und dabei die Vorformlinge und das Kunststoffmaterial geformt. Somit wird ein Strukturverbund hergestellt, der den Kunststoff mit den darin enthaltenen Fasern als Verstärkung umfasst.

Die EP2363 273 A1 umfasst ein Verfahren zur Bereitstellung von zwei Komponenten, wobei die erste Komponente aus Faserverbundmaterial hergestellt ist. Das Preform ist mit letzterer Komponente während der Vorfertigungsphase formschlüssig verbunden. Letztere Komponente ist einem Formwerkzeug so zugeordnet, dass eine Umfangskontur des letzteren Teils beim Ablegen des Fasermaterials teilweise am Formwerkzeug umschlossen ist.

Die EP 2 730 385 A1 bezieht sich auf ein Wärmeregelungssystem für eine adaptive Verdichtungswalze zur Herstellung von verfestigten Schichten aus faserverstärkten Polymeren. Die adaptive Verdichtungswalze wird zum Auftragen auf einer Auftragsoberfläche verwendet. Aus mindestens einem vorimprägnierten Flachband wird ein Band gebildet, wobei eine Heizeinrichtung dazu ausgelegt ist, auf das Band gerichtete Wärmestrahlung abzugeben.

Die erfindungsgemäße Vorrichtung ist geeignet zur insbesondere finalen Konsolidierung einer thermoplastischen Preform, insbesondere einer Kohlenstofffaser-Thermoplast Preform, welche in einem noch nicht final konsolidierten Zustand in der Vorrichtung positionierbar ist. Die Erfindung kann insbesondere für Schalenbauweisen oder zur Zwischenkompaktierung eingesetzt werden und umfasst ein Heizelement zur Erwärmung der Preform und ein Konsolidierungselement zur Beaufschlagung der Preform mit Druck und zur Kühlung der Preform. Zur Konsolidierung der Preform sind das Heizelement und das Konsolidierungselement derart zueinander angeordnet und bewegbar dass die Preform nach einer Erhitzung mittels des Heizelements durch das Konsolidierungselement mit Druck beaufschlagbar und kühlbar ist.

Die erfindungsgemäße Vorrichtung kann als vorteilhafte Alternative zu einem Ofen- oder Autoklaveprozess im Rahmen einer nachgeschalteten, finalen Konsolidierungsstufe zur Anwendung kommen. Dabei ermöglicht das Heizelement, die typischerweise großflächig ausgeführte Preform wenigstens bereichsweise besonders gezielt und bevorzugt lokal zu erwärmen, wobei eine Erwärmung bevorzugt über den gesamten Querschnitt der Preform erfolgt, wozu geeignete Heizelemente eingesetzt werden, welche in vorgesehenen Bereichen einen für die Konsolidierung ausreichenden Wärmeeintrag in das Laminat ermöglichen. Das Konsolidierungselement ist dazu eingerichtet, einen mittels des Heizelements erwärmten Bereich derart mit Druck zu beaufschlagen und zu kühlen, dass die Preform konsolidiert wird.

Die erfindungsgemäße Vorrichtung ermöglicht die Herstellung thermoplastischer Rumpfschalen, wobei großflächig Laminate mit sehr geringem Porengehalt und damit erhöhter Qualität hergestellt werden können. Dadurch wird es möglich, in größerem Umfang thermoplastische Bauweisen für Rumpfbauweisen einzuführen, wodurch beispielsweise die Montage vereinfacht und das Schadensverhalten verbessert werden können. Auf Autoklaven und Öfen zur finalen Konsolidierung kann verzichtet werden, weil das Heizelement und das Konsolidierungselement dazu eingerichtet sind, eine ausreichende Wärmemenge in die Preform einzubringen bzw. einen ausreichend hohen Druck auf die Preform aus thermoplastischem Werkstoff auszuüben und letztere ausreichend zu kühlen. Dadurch können Investitions- und Betriebskosten gesenkt werden.

Gemäß einer ersten Ausführungsform ist vorteilhaft vorgesehen, dass das Heizelement dazu eingerichtet ist, von einer Position aus die gesamte Preform zu erhitzen. Weiterhin umfasst das Konsolidierungselement eine Konstruktion, z.B. eine Presse, welche dazu eingerichtet ist, zur Konsolidierung auf die gesamte Preform gleichzeitig Druck auszuüben und die gesamte Preform zu kühlen. Eine derartige Pressentechnologie sieht vor, dass eine Erhitzung der gesamten Preform in einem ersten Schritt erfolgen kann und anschließend mittels eines entsprechend massiven Stempels die Konsolidierung durchgeührt werden kann.

Gemäß der Erfindung ist vorgesehen, dass das Konsolidierungselement wenigstens eine Konsolidierungsrolle umfasst. Das Heizelement und die Konsolidierungsrolle sind derart entlang der Preform bewegbar, dass die Preform Bereich für Bereich mittels des Heizelements erhitzbar und anschließend durch die Konsolidierungsrolle mit Druck beaufschlagbar sowie kühlbar ist. Mit dieser besonders bevorzugten Kombination aus Heizelement und Konsolidierungsrolle Wird insbesondere ermöglicht, dass vorlaufend zunächst jeweils ein Bereich bzw. Abschnitt der zu konsolidierenden Preform erwärmt werden kann, während die Konsolidierungsrolle im Anschluss daran über den erhitzten Bereich gerollt wird und die notwendige Druckbeaufschlagung und Kühlung für die eigentliche, finale Konsolidierung liefert, wobei sich die Ausführung der Rolle nach der Komplexität des Schalenbauteils richten kann. Wie Fig. 2 zeigt, lässt sich im Vergleich zum Stand der Technik ein komplettes Schalenelement wesentlich schneller aufbauen, da wesentlich breitere Halbzeuge bzw. Preforms 2 abgelegt werden können, wodurch ein Beitrag zur Produktivitätssteigerung geleistet Wird.

Das Heizelement umfasst beispielsweise Licht emittierende Dioden. Besonders bevorzugt sind die LED dabei in einem flächig ausgeführten LED-Array zusammengefasst. Derartige LED bzw. LED-Arrays stellen ein besonders leistungsfähiges Heizsystem dar, mit welchem insbesondere im Vergleich zu herkömmlichen Autoklaven und Ofen erheblich Energie eingespart werden kann. Alternativ können auch Laser-Systeme zum Einsatz kommen, welche jedoch im Vergleich zu LED eine längere Zeit zur vorstehend beschriebenen bereichsweisen Erwärmung der Preforrn benötigen.

Ebenfalls ist vorgesehen, dass die Konsolidierungsrolle mittels einer Bahnführung entlang der Preform führbar ist, wobei die Bahnführung an unterschiedliche Materialstärken der Preform angepasst sein kann. Besonders bevorzugt ist vorgesehen, dass die Bahnführung eine Führungsnut und einen Führungsarm umfasst, wobei an dem Führungsarm die Konsolidierungsrolle und/oder das Heizelement angeordnet sind.

Die Konsolidierungsrolle kann alternativ auch mittels eines Roboters oder eines Portals entlang der Preform führbar sein, wodurch insbesondere die Anpassungsfähigkeit an unterschiedliche, zu konsolidierende Preforms erhöht werden kann.

Weiterhin kann die Vorrichtung eine Sensorik zur Erfassung des Drucks und/oder der Temperatur an einem Berührungspunkt, üblicherweise Nip-Point genannt, von Konsolidierungselement und Preform aufweisen, um eine Überwachung und Steuerung der Vorrichtung zu verbessern.

Weiterhin kann die Konsolidierungsrolle mehrere Rollensegmente oder ein flexibles Material umfassen, wo eine Berührung mit der Preform vorgesehen ist. Dadurch wird ein Einsatz auch auf mehrfach gekrümmten Bauteilen ermöglicht bzw. es können bereichsweise unterschiedliche Drücke auf die Preform ausgeübt werden.

Ferner können zwei Konsolidierungsrollen mittels einer Führungsrolle entlang der Preform bewegbar sein. Z.B. können dadurch zwei oder viele kleine Konsolidierungsrollen von einer Führungsrolle geführt werden, wobei die kleinen Konsolidierungsrollen beispielsweise mit Druckluftzylindern auf eine spezifische Anpresskraft eingestellt werden können und die Führungsachse die kleinen Konsolidierungsrollen entlang der Preform führt bzw. bewegt. Der Vorteil der einzelnen kleinen Konsolidierungsrollen liegt unter anderem darin, dass bestimmte Konsolidierungskraftrampen und Wärmerampen realisiert werden könne oder dass die hinteren Konsolidierungsrollen kühlen anstatt erwärmen können.

Gemäß einer weiteren Ausführungsform ist vorgesehen, dass das Heizelement innerhalb des Konsolidierungselements angeordnet ist, welches transparent ausgeführt, wodurch insbesondere Bauraum eingespart werden kann.

Nachfolgend wird anhand der beigefügten Zeichnungen näher auf Ausführungsbeispiele der Erfindung eingegangen. Es zeigen:
- **Fig. 1**: eine Möglichkeit zum Ablegen und Konsolidieren einer Preform nach einem bekannten Verfahren,
- **Fig. 2**: eine Möglichkeit des Ablegens und der Konsolidierung einer Preform mit einer Ausführungsform einer erfindungsgemäßen Vorrichtung und
- **Fig. 3**: ein Ausführungsbeispiel einer erfindungsgemäßen Vorrichtung in einer schematischen Perspektivansicht.

Auf Fig. 1 und 2 wurde bereits weiter oben eingegangen.

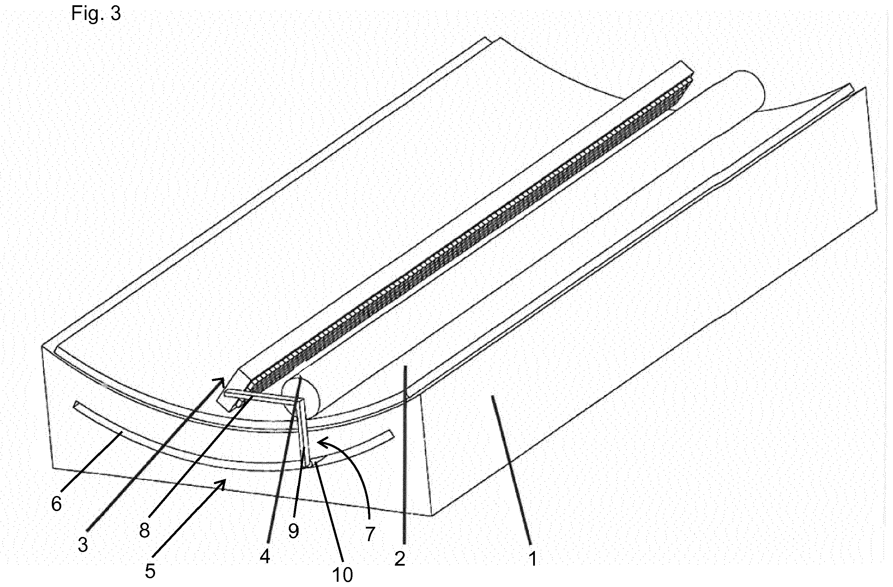

Fig. 3 zeigt ein Ausführungsbeispiel einer erfindungsgemäßen Vorrichtung 1 zur Konsolidierung einer thermoplastischen Preform, in diesem Fall einer Kohlenstofffaser-Thermoplast Preform 2. Die Vorrichtung 1 umfasst ein Heizelement in Form eines flächig ausgeführten LED-Arrays 3 zur Erwärmung der Preform 2 und ein Konsolidierungselement in Form einer Konsolidierungsrolle 4 zur Beaufschlagung der Preform 2 mit Druck und zur Kühlung der Preform 2.

Zur Konsolidierung der Preform 2 sind der LED-Array 3 und die Konsolidierungsrolle 4 an einem gemeinsamen Führungsarm 7 angeordnet, welcher zusammen mit einer bogenförmigen Führungsnut 6 Teil einer Bahnführung 5 ist. Der Führungsarm 7 weist ein Verbindungsteil 8 auf, an dessen entgegengesetzten Längsenden der LED-Array 3 und die Konsolidierungsrolle 4 voneinander beabstandet angebracht sind. Die Konsolidierungsrolle 4 ist dabei um ihre Längsachse drehbar in dem Verbindungsteil 8 gelagert. Der LED-Array 3 ist parallel zur Führungsrolle 4 an dem Verbindungsteil 8 um seine Längsachse drehbar befestigt, so dass die Preform 2 mit unterschiedlichen Winkeln angestrahlt und dadurch unterschiedlich stark erhitzt werden kann.

Weiterhin weist der Führungsarm 7 einen Führungsteil 9 auf, welcher mit dem Verbindungsteil 8 einteilig verbunden ist und mit diesem einen rechten Winkel einschließt. Auf Höhe des dem Verbindungsteil 8 zugewandten Längsendes des Führungsteils 9 ist die Konsolidierungsrolle 4 gelagert. An seinem dem Verbindungsteil 8 abgewandten Längsende ist ein Antriebselement 10 gelenkig in dem Führungsteil 9 gelagert. Das Antriebselement 10 ist dazu eingerichtet, sich entlang der Führungsnut 6 zu bewegen und dadurch den Führungsarm 7 anzutreiben, so dass sich der LED-Array 3 und die Konsolidierungsrolle 4 entlang der Preform 2 bewegen. Der Verlauf der Führungsnut 6 und die Länge des Führungsteils sind derart gewählt, dass die Konsolidierungsrolle 4 mit einem bestimmten Druck auf der Preform 2 aufliegt und auf dieser abrollt. Im vorliegenden Beispiel weist die Preform 2 überall die gleiche Materialstärke auf. Sofern davon abweichend eine Preform mit bereichsweise unterschiedlichen Materialstärken konsolidiert werden soll, kann der Verlauf der Führungsnut entsprechend geändert werden, um die Druckbeaufschlagung entsprechend anzupassen.

Zur Konsolidierung wird der Führungsarm in Richtung des LED-Arrays 3 bewegt, so dass zunächst ein Bereich der Preform 2 mittels des LED-Arrays erhitzt werden kann und anschließend der Bereich mittels der Konsolidierungsrolle 4 mit Druck beaufschlagt und gekühlt werden kann.

## Patentansprüche

1. Vorrichtung (1) zur Konsolidierung einer thermoplastischen Preform (2) umfassend
- ein Heizelement (3) zur Erwärmung der Preform (2) und
- ein Konsolidierungselement (4) zur Beaufschlagung der Preform (2) mit Druck und zur Kühlung der Preform (2),
wobei zur Konsolidierung der Preform (2) das Heizelement (3) und das Konsolidierungselement (4) derart zueinander angeordnet und bewegbar sind, dass die Preform (2) nach einer Erhitzung mittels des Heizelements (3) durch das Konsolidierungselement (4) mit Druck beaufschlagbar und kühlbar ist,
wobei das Konsolidierungselement wenigstens eine Konsolidierungsrolle (4) umfasst und das Heizelement (3) und die Konsolidierungsrolle (4) derart entlang der Preform (2) bewegbar sind, dass die Preform (2) Bereich für Bereich mittels des Heizelements (3) erhitzbar und anschließend durch die Konsolidierungsrolle (4) mit Druck beaufschlagbar sowie kühlbar ist,
wobei die Konsolidierungsrolle (4) mittels einer Bahnführung (5) entlang der Preform (2) führbar ist, und
wobei die Bahnführung (5) eine Führungsnut (6) und einen Führungsarm (7) umfasst, wobei an dem Führungsarm (7) die Konsolidierungsrolle (4) und/oder das Heizelement (3) angeordnet sind.

2. Vorrichtung (1) nach Anspruch 1, **dadurch gekennzeichnet, dass** das Heizelement Licht emittierende Dioden (LED) umfasst.

3. Vorrichtung (1) nach Anspruch 2, **dadurch gekennzeichnet, dass** die LED in einem flächig ausgeführten LED-Array (3) zusammengefasst sind.

4. Vorrichtung (1) nach einem der vorstehenden Ansprüche, **dadurch gekennzeichnet, dass** die Bahnführung (5) an unterschiedliche Materialstärken der Preform (2) angepasst ist.

5. Vorrichtung (1) nach einem der vorstehenden Ansprüche, **gekennzeichnet durch** eine Sensorik zur Erfassung des Drucks und/oder der Temperatur an einem Berührungspunkt von Konsolidierungselement und Preform (2).

6. Vorrichtung (1) nach einem der vorstehenden Ansprüche, **dadurch gekennzeichnet, dass** die Konsolidierungsrolle (4) mehrere Rollensegmente umfasst.

7. Vorrichtung (1) nach einem der vorstehenden Ansprüche, **dadurch gekennzeichnet, dass** die Konsolidierungsrolle (4) ein flexibles Material umfasst, wo eine Berührung mit der Preform (2) vorgesehen ist.

8. Vorrichtung (1) nach einem der vorstehenden Ansprüche, **dadurch gekennzeichnet, dass** zwei Konsolidierungsrollen mittels einer Führungsrolle entlang der Preform bewegbar sind.

9. Vorrichtung (1) nach einem der vorstehenden Ansprüche, **dadurch gekennzeichnet, dass** das Heizelement innerhalb des Konsolidierungselements angeordnet ist, welches transparent ausgeführt ist.

## Claims

1. A device (1) for consolidating a thermoplastic preform (2), comprising:
- a heating element (3) for heating the preform (2); and
- a consolidation element (4) for exposing the preform to pressure and for cooling the preform (2),
wherein, to consolidate the preform (2), the heating element and consolidation element (4) are arranged and are movable relative to each other in such a way that the preform (2) can be is exposed to pressure and cooled by the consolidation element after being heated by the heating element (4),
wherein the consolidation element comprises at least one consolidation roller (4), and the heating element (3) and consolidation roller (4) are moveable along the preform (2) in such a way that the preform (2) is heated region by region by the heating element (3), and subsequently pressurized as well as cooled by the consolidation roller (4),
wherein the consolidation roller (4) is guidable along the preform by a web guide (5), and
wherein the web guide (5) comprises a guide groove (6) and a guide arm (7), wherein the consolidation roller (4) and/or heating element (3) are arranged on the guide arm (7).

2. The device (1) according to claim 1, **characterized in that** the heating element comprises light-emitting diodes (LEDs).

3. The device (1) according to claim 2, **characterized in that** the LEDs are combined into an LED array (3) with a flat configuration.

4. The device (1) according to any of the preceding claims, **characterized in that** the web guide (5) is adjusted to varying material thicknesses of the preform (2).

5. The device (1) according to any of the preceding claims, **characterized by** a sensor array for acquiring the pressure and/or temperature on a contact point of the consolidation element and preform (2).

6. The device (1) according to any of the preceding claims, **characterized in that** the consolidation roller (4) comprises several roller segments.

7. The device (1) according to any of the preceding claims, **characterized in that** the consolidation roller (4) comprises a flexible material, where contact with the preform (2) is provided.

8. The device (1) according to any of the preceding claims, **characterized in that** two consolidation rollers are guidable along the preform by a single guide roller

9. The device (1) according to any of the preceding claims, **characterized in that** the heating element is arranged inside the consolidation element, which is configured transparent.

## Revendications

1. Dispositif (1) de consolidation d'une préforme thermoplastique (2) comprenant
- un élément chauffant (3) pour chauffer la préforme (2) et
- un élément de consolidation (4) pour pressuriser la préforme (2) et pour refroidir la préforme (2), dans lequel pour consolidation la préforme (2, l'élément chauffant (3) et l'élément de consolidation (4) sont disposés de telle manière l'un à l'autre et sont déplaçable que la préforme (2) après un chauffage par l'élément chauffant (3) est pressurisé et refroidi par l'élément de consolidation (4),
dans lequel l'élément de consolidation comprend au moins un rouleau de consolidation (4) et l'élément de chauffage (3) et le rouleau de consolidation (4) sont déplaçable de telle manière le long de la préforme (2) que la préforme (2) peut être chauffée zone par zone par l'élément de chauffage (3) et ensuite peut être pressurisé et refroidi par le rouleau de consolidation (4),
dans lequel le rouleau de consolidation (4) peut être guidée par un guide de bande (5) le long de la préforme (2), et
dans lequel le guide de bande (5) comprend une rainure de guidage (6) et un bras de guidage (7), dans lequel le rouleau de consolidation (4) et/ou l'élément chauffant (3) sont disposées au bras de guidage (7).

2. Dispositif (1) selon la revendication 1, **caractérisé en ce que** l'élément chauffant comprend des diodes électroluminescentes (LED).

3. Dispositif (1) selon la revendication 2, **caractérisé en ce que** les LED sont combinées dans un réseau de LED plat (3).

4. Dispositif (1) selon l'une des revendications précédentes, **caractérisé en ce que** le guide de bande (5) est adapté à différentes épaisseurs de matière de la préforme (2).

5. Dispositif (1) selon l'une quelconque des revendications précédentes, **caractérisé par** un capteur pour détecter la pression et/ou la température au niveau d'un point de contact de l'élément de consolidation et de la préforme (2).

6. Dispositif (1) selon l'une des revendications précédentes, **caractérisé en ce que** le rouleau de consolidation (4) comprend une pluralité de segments de rouleau.

7. Dispositif (1) selon l'une des revendications précédentes, **caractérisé en ce que** le rouleau de consolidation (4) comprend un matériau souple où un contact avec la préforme (2) est prévu.

8. Dispositif (1) selon l'une des revendications précédentes, **caractérisé en ce que** deux rouleaux de consolidation sont déplaçables par un galet de guidage le long de la préforme.

9. Dispositif (1) selon l'une des revendications précédentes, **caractérisé en ce que** l'élément chauffant est disposé à l'intérieur de l'élément de consolidation, qui est rendu transparent.
